# EUROPEAN PATENT SPECIFICATION

(11) **EP 0 272 158 B1**
(45) Date of publication and mention of the grant of the patent: **14.09.1994**
(21) Application number: 87311231.2
(22) Date of filing: 21.12.1987
(51) Int. Cl.: G06F 15/38, G06K 17/00

(54) **Electronic dictionary**
Elektronisches Wörterbuch
Dictionnaire électronique

(30) Priority: 19.12.1986 JP 301760/86; 19.01.1987 JP 8069/87; 19.01.1987 JP 8070/87; 13.02.1987 JP 29884/87
(43) Date of publication of application: 22.06.1988
(73) Proprietor: Oki Electric Industry Company, Limited, Tokyo 105 (JP)
(72) Inventor: Tanoshima, Katsuhide, Minatoku Tokyo (JP); Nagasawa, Hikoshi, Minatoku Tokyo (JP)
(74) Representative: SERJEANTS

(56) References cited:
- EP-A- 0 180 888
- EP-A- 0 201 096
- DE-A- 3 233 194
- PATENT ABSTRACTS OF JAPAN VOL. 9, NO. 76 (P-346) (1799), 5. APRIL 1985; & JP-A- 59 206 985 (HITACHI SEISAKUSHO K.K) 22.11.1984
- PATENT ABSTRACTS OF JAPAN VOL. 10, NO. 119 (P-453) (2176), 6 MAY 1986; & JP-A- 60 247 785 (TOSHIBA K.K.) 07.12.1985
- PATENT ABSTRACTS OF JAPAN VOL. 7, NO. 164 (P-211) (1309), 19. JULY 1983; & JP-A- 58 070 372 (SHARP K.K.) 26.04.1983
- COMMUNICATIONS OF THE ASSOCIATION OF COMPUTING MACHINERY VOL. 27, NO. 4, APRIL 1984, PAGES 322-329, NEW YORK, USA; A.B. TUCKER: "A PERSPECTIVE ON MACHINE TRANSLATION: THEORY AND PRACTICE"

## Description

The invention relates to a device for the electronic translation of words or compound words from one language (source language) into words or compound words of another language (target language). Such a device is referred to herein as an electronic dictionary. In particular, the invention relates to the means of input into the electronic dictionary of the words or compound words to be translated and to the manner of output from the electronic dictionary of the translated words or compound words.

Commercially available electronic dictionaries require keyboard input of words or compound words in the source language and display corresponding words or compound words in the target language, possibly including other information such as the meanings of the translated words, their pronunciation, and their parts of speech. Keyboard input, however is liable to error, especially when the operator enters the words by looking at the source document and keyboard alternately. Each time an input error is made, the word must be reentered by correcting the error. Input may therefore be slow, requiring longer than it takes to consult an ordinary dictionary. Further, the operator normally has to write the target words found on the same document so as not to forget them. Further still, if the word or compound word to be translated is in a variant form (for example, the past tense or progressive form of a verb), in most cases the user has to determine mentally the original or canonical form of the word, prior to inputting it on the keyboard. The procedure has thus been extremely cumbersome, and conventional electronic dictionaries have not been able to provide the full benefits to be expected from an electronic dictionary.

To overcome these problems it has been suggested in JP 59-206985 to use an optical character reading device as the means of inputting the words or compound words from the source language to the electronic translation unit. The output from the translation unit in the described mechanical translating system is printed on an output sheet of paper. At present, however, mechanical translating systems are not so sophisticated that the result can be accepted without checking and editing by a skilled human translator. His work may be liable to error or at least considerably slowed for the same reason as the keyboard operator mentioned previously, namely looking at the source document and output document alternatively and each time having to find his position on each document.

The invention provides an electronic translating device for the electronic translation of words or compound words in a source language on a source document, to the corresponding words or compound words in a target language, the electronic translating device comprising a scanner housing unit, an optical reader fixedly mounted in the scanner housing unit so as to be fixed relative thereto, which optically reads the source language to be translated from the source document, a translation unit which produces an output of the target language on the basis of the data output from the optical reader, a display unit for displaying the target language, and CHARACTERISED BY a printing device fixedly mounted in the scanner housing unit so as to be fixed relative to the scanner housing unit and the optical reader for automatically printing the target language on to the source document at a fixed distance from the position of the optical reader in the vicinity of the corresponding word or compound words of the source language to be translated during the reading of the source language by the optical reader.

Preferably the words or compound words of the target language are printed on to the source document between successive lines of the source language.

In a preferred embodiment of the electronic dictionary, the optical reader, translation unit, display unit and printing device are provided in a unitary housing.

In another preferred embodiment, the translation unit and display unit are provided in a unitary housing to which the scanner housing unit is connected by a connector cord.

The electronic dictionary configured as described above operates as follows:

Input of the words to be translated, which are recorded on a source document, is effected using the optical reader. The optical reader may comprise, for example, a light source for illuminating the source document and a photoelectric sensor which converts the light reflected from the source document into electrical signals. When the language to be translated is thus input, the translator unit, based on the result of reading by the optical reader, outputs the corresponding translated language information. The corresponding translated language information, for example, may include the meanings of the words, their pronunciation, and other information provided in an ordinary dictionary. The display unit displays the translated lanugage information which is output from the translation unit. The optical reader and the printing device are disposed at fixed positions relative to each other, so that the said part of the translated language information will be printed at a fixed position relative to and on the same paper as the input language. This greatly simplifies the work of the skilled human translator, who has to perfect and finalise the mechanical translation.

In another preferred embodiment of the invention, the optical reader illuminates the source document containing the language to be translated with light from an external source. For the illumination with light from an external source, a condenser is provided to enable the optical reader to condense light from the external source. The condenser may be a lens or any other form of condenser, such as a solar collector.

In still another embodiment of the invention, the translation unit identifies, based on output from the optical reader, variants of the language to be translated and, as a result of that identification makes predetermined changes at the word ending or ignores the word endings, and produces translated language information corresponding to the original or canonical form of the word. Corresponding target language information may, for example, include the meanings of the canonical form of the source words, their pronunciation, and other information necessary in a dictionary. Even if the word to be translated is in a variant form, the electronic dictionary is capable of producing translated language information consistent with the canonical form of the word, irrespective of its variation. This provides a function of an ordinary dictionary.

The invention is illustrated with reference to the accompanying drawings, of which:
Figure 1 is a schematic perspective external view of a conventional electronic dictionary;
Figure 2 is a block diagram showing the internal configuration of the electronic dictionary of Figure 1;
Figure 3 is a block diagram showing the internal configuration of an electric dictionary according to the invention;
Figure 4 is a schematic perspective view of an optical reader, being a part of the electronic dictionary of Figure 3;
Figure 5 is a block diagram showing the internal configuration of a semantic dictionary and a retrieval controller, being parts of the electronic dictionary of Figure 3;
Figure 6 is a schematic illustration of the internal arrangement of a word library and a dictionary memory, respectively being parts of the retrieval controller and semantic dictionary of Figure 5;
Figures 7 and 8 are schematic perspective external views of electronic dictionaries each incorporating the configurations and arrangements shown in Figures 3 to 6;
Figure 9 is a block diagram similar to that of Figure 3 but showing the internal configuration of a modified electronic dictionary according to the invention;
Figures 10A, 10B and 10C are diagrams showing details of a printing device being a part of the modified electronic dictionary of Figure 9;
Figures 11 and 12 are schematic perspective external views of electronic dictionaries each incorporating the configurations and arrangements shown in Figures 9 and 10;
Figure 13 is a block diagram similar to that of Figures 3 and 9 but showing the internal configuration of another modified electronic dictionary according to the invention;
Figure 14 is a schematic perspective view of an optical reader being a part of the electronic dictionary of Figure 13;
Figure 15 is a schematic perspective view of an optical reader which can be substituted for that shown in Figure 14 in the electronic dictionary of Figure 13;
Figure 16 is a diagram illustrating the operating principles of the condenser included in the optical reader of Figure 15;
Figures 17A and 17B are schematic perspective external views of electronic dictionaries incorporating the configurations and arrangements shown in Figures 13 to 16;
Figure 18 is a block diagram showing the internal configuration of a retrieval controller and a semantic dictionary, which may be incorporated in any of the electronic dictionaries of Figures 3, 9 and 13 in place of those shown in Figure 5;
Figure 19 is a flowchart illustrating the operation of the retrieval controller of Figure 18; and
Figure 20 is a flowchart showing operation of another example of a retrieval controller.

In the following description, it will be understood that the source language is English and that the target language is Japanese. Throughout the description, like parts have been given the same reference numerals.

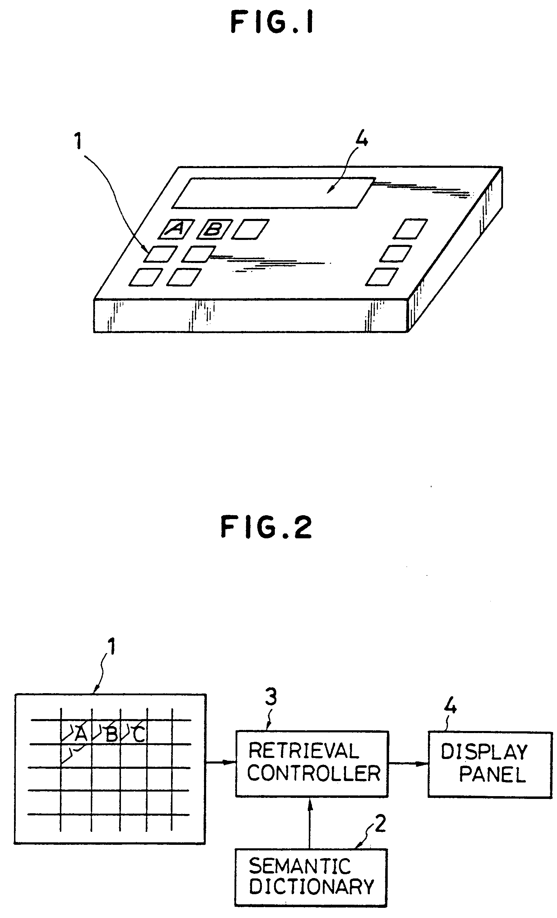

In the conventional electronic dictionary of Figures 1 and 2 of the drawings, the English word to be translated is entered in alphabetical characters from a keyboard 1 by a finger-pressing action of the operator. The alphabetical characters are fed to a retrieval controller 3. Then retrieval controller 3 retrieves the corresponding English word from a semantic dictionary 2, and the meaning and other items associated with the Japanese word corresponding to the English word are displayed on a display panel 4.

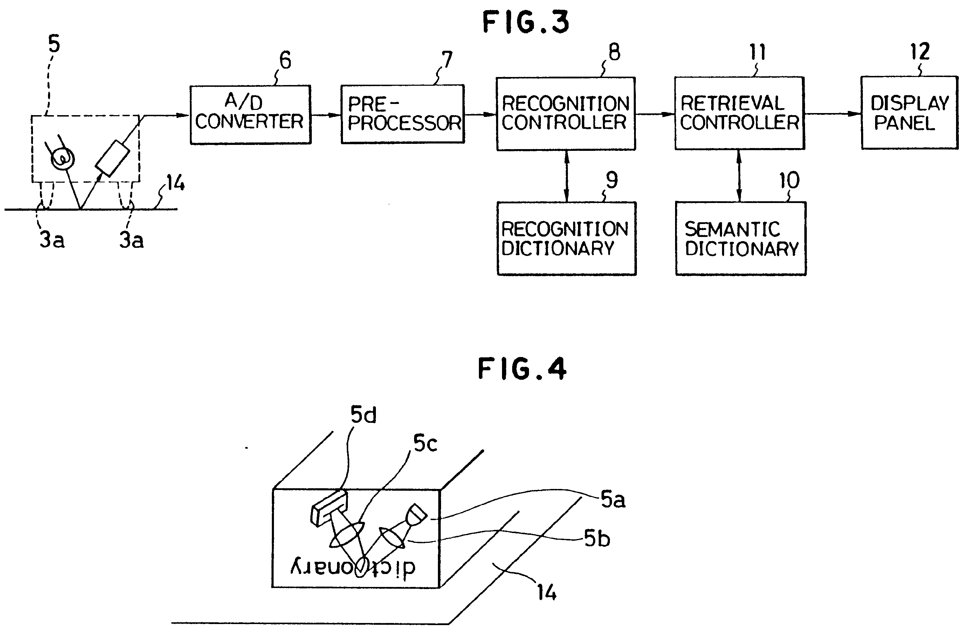

With reference to Figures 3 to 7 of the drawings, there is shown an electronic dictionary for translating English words or compound words to the corresponding Japanese words or compound words. The electronic dictionary also provides other information normally found in a conventional dictionary, such as pronunciation, examples of usage, parts of speech and word origin.

As shown in Figure 3, the electronic dictionary comprises an optical reader 5, an analog/digital converter (abbreviated as A/D converter) 6, a preprocessor 7, a recognition controller 8, a recognition dictionary 9, a semantic dictionary 10, a retrieval controller 11, and a display panel 12. The optical reader 5, more fully shown in Figure 4, comprises a light source 5a which illuminates a source document 14 on which the English words to be translated are printed, a lens 5b which condenses the light from the light source 5a on to the source document 14, a pickup sensor 5d and a lens 5c which forms an image of the reflected light from the source document 14 on the pickup sensor 5d. The pickup sensor 5d converts the light from the image into electrical signals indicating brightness and darkness. The pickup sensor 5d may be a CCD sensor, for example. The A/D converter 6 converts the analog signals from the pickup sensor 5d into digital signals, supplying the digital signals to the preprocessor 7. The preprocessor 7, in addition to converting received digital signals into binary signals, performs smoothing, noise removal and like operations. The recognition dictionary 9 contains standard alphabetic character patterns for the recognition of optically read alphabetic characters. The recognition controller 8, based on the standard patterns contained in the recognition dictionary 9, identifies the binary signals, or alphabetic characters that have been read. Briefly stated, the identification method can be divided into pattern matching and structural analysis. Pattern matching consists of pre-storage of two-dimensional images of characters in the dictionary as they are, and a process of matching a given input pattern, comprised of binary signals that have been read, with a pattern in the dictionary. Structural analysis consists of extraction of partial profiles of characters from the characters; dictionary storage of descriptions of the extracted partial profiles, and their interrelationships; and a process of matching a given input pattern with the stored information. In this embodiment the identification of alphabetic characters that are read can be done either by pattern matching or by structural analysis. Since headings and the initial letter of an English sentence are capitalized, the recognition controller 9 ignores the difference between upper and lower case when identifying a character.

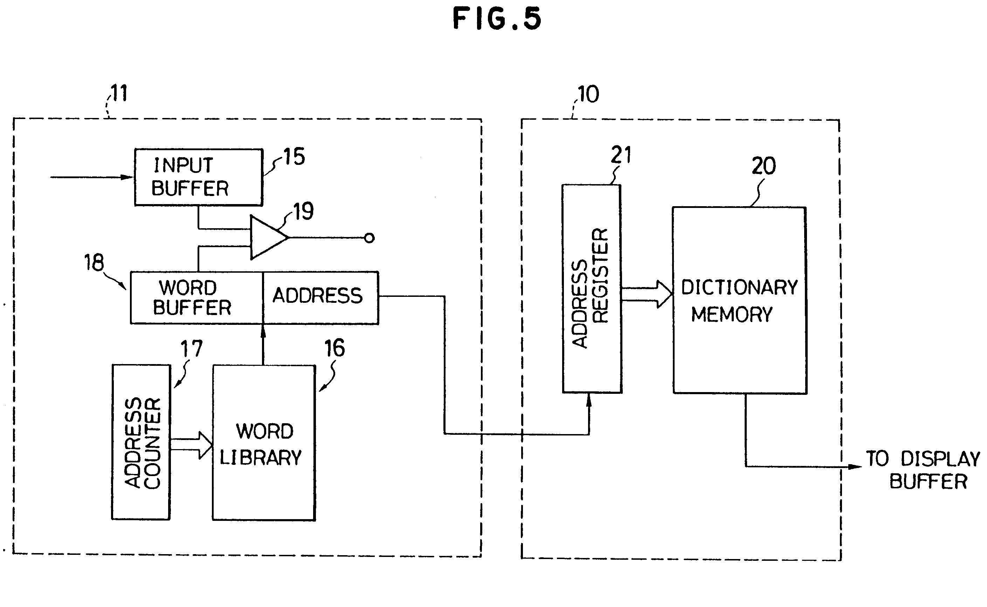

The semantic dictionary 10 contains dictionary storage of Japanese language data corresponding to English words, including word meaning, pronunciation symbols, related grammar, sentence examples using a given word, synonyms and antonyms. The retrieval controller 11 retrieves from the semantic dictionary 10 the Japanese word corresponding to a given English word that has been read. As shown in Figure 5, the retrieval controller 11 includes: an input buffer 15 which is used for temporary storage of character codes for the storage of alphabetic characters corresponding to the single word which has been identified by the recognition controller 8; a word library 16 which contains the starting address in a dictionary memory 20 (further described hereinbelow) which contains English words to be translated and the meanings of the corresponding Japanese words; an address counter 17 for scanning the English words stored in the word library 16; a register 18 for temporary storage of the English words and their starting addresses as read from the word library 16; and a gate 19 which determines whether the English words obtained from the input buffer 15 and the register 18 match. The semantic dictionary 10 includes the dictionary memory 20 containing Japanese language information, such as the meanings of Japanese words and their pronunciation symbols, as discussed above; and a register 21 which specifies the address in the dictionary memory 20.

The display panel 12 displays the translated Japanese language information which is retrieved by retrieval controller 11.

The electronic dictionary described with reference to Figures 3 to 5 operates as follows: When the source document 14 containing the English words to be translated is illuminated by light source 5a, as shown in Figure 2, the reflected light is fed into the pickup sensor 5d through the lens 5c. The pickup sensor 5d converts the reflected light into electrical signals which are fed into the recognition controller 8 after undergoing binarization and related treatment in the preprocessor 7.

The recognition controller 8, using the aforementioned pattern matching or structural analysis method, and by referencing the alphabetical standard patterns stored in the recognition dictionary 9, identifies the individual alphabetic characters that have been read. It then sends English word character codes, consisting of a group of identified alphabetic characters, to the retrieval controller 11.

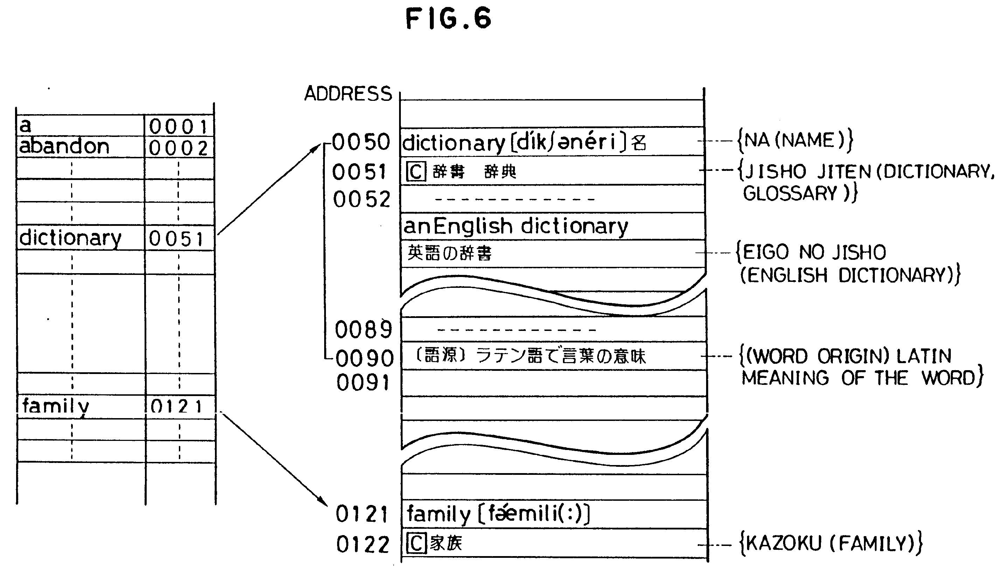

Figure 6 shows examples of word storage in the word library 16 and the dictionary memory 20. In Figure 6, the alphabetic writing in { } connected by chain lines to Japanese characters is not actually in the dictionary but is inserted in the Figure for explanation to English readers.

The following describes translation operations. The string of alphabetic codes equivalent to a single word that has been identified is stored in the input buffer 15 shown in Figure 5. Then the English word and its address code ("a" and "0001" as illustrated) are sent from the beginning of the word library 16 to the word buffer and address in the register 18. The gate 19 then determines whether or not the character code (English word that has been read in) stored in the input buffer 15 matches the English word stored in register 18. If there is no match, "1" is added to address counter 17, which causes the next English word and address ("abandon" and "0002" as illustrated) in the word library 16 to be sent to the register 18. Then, as described above, the gate 19 determines whether or not the word in register 18 matches the English word that has been read in. Words in the word library 16 continue to be read until a match is found between the English word that has been read in and an English word read from the word library 16. When a match of English words is determined by the gate 19, the address contained in register 18 at that time is sent to the address register 21 of the semantic dictionary 10. Suppose, for example, that the English word that has been read is "dictionary" and that this has been retrieved. Then, as shown in Figure 6, the code for address "0051" is sent to the address register 21. The semantic dictionary 10 transfers the contents of the dictionary memory 20, using the address specified by the address register 21 as the starting addresses, one by one to a display buffer which is not shown in the figure (although in this embodiment the display buffer is provided in the retrieval controller 11, it can be in the semantic dictionary 10). In terms of the above "dictionary" example, this operation is carried out until endmark 22, "*", in Figure 6 is encountered, i.e. until the contents of address 0051 - 0090 have been transferred. The string of alphabetic characters thus read optically are converted to corresponding Japanese word information including Japanese word meaning, which is then displayed on the display panel 12 via the display buffer.

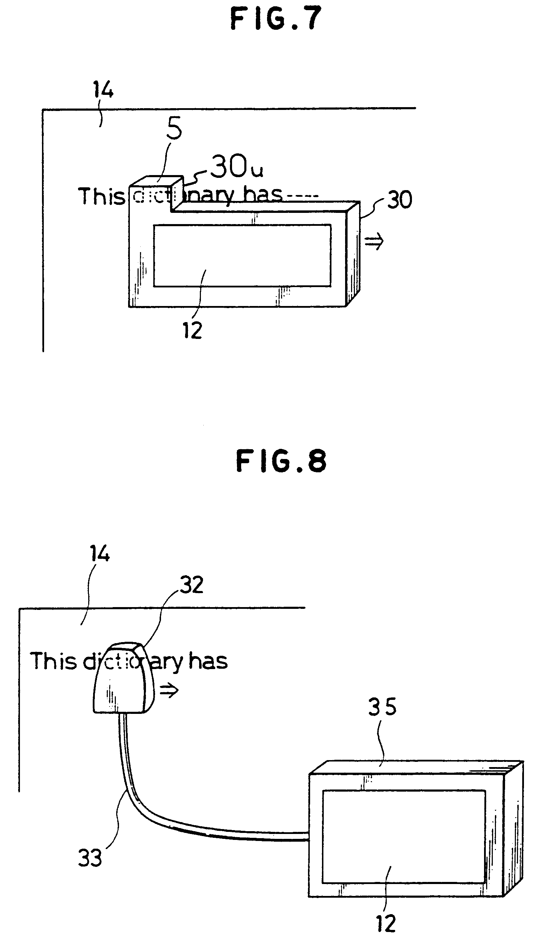

Figure 7 is a schematic perspective external view of the electronic dictionary described with reference to Figures 3 to 6. This is a hand-held electronic dictionary. A main unit 30, containing the elements shown in Figure 3, has an upper protrusion 30v integrally mounting the optical reader 5. To read the English word to be translated, the user with one hand lifts the main unit 30, brings the optical reader 5 to the beginning of the English word and, holding the optical reader 5 against the source document 14, scans the source document 14 to the right as shown in the Figure. The alphabetic characters on the source document 14 are thus optically read, are subsequently converted to Japanese language information by the above described operations, and are displayed on the display panel 12. Means are provided to keep constant the space between the surface of the source document 14 and the light receiving surface of the image sensor. Such means may comprise protrusions 3a as shown in Figure 3. The protrusions 3a should be slidable on the source document 14.

Figure 8 shows an electronic dictionary similar to that of Figure 7, except that the optical reader 5 has been separated from the main unit, now reference 35, and located in a scanner 32. The scanner 32 and the main unit 30 are electrically connected by a connector cord 3.

In this embodiment, the scanner 32 is held against the source document 14, and as described with reference to Figure 7, the optical reader 5 in the scanner 32 is moved along the source document 14. The information picked up by the scanning process is transferred to the main unit 30 via the connector cord 33. The translated Japanese word information is displayed on the display unit 12 which is a part of the main unit 35.

The hand-held electronic dictionaries described with reference to Figures 7 and 8 allow simple, easy document reading and input. Further, the electronic dictonary shown in Figure 8, requiring only scanning by the scanner 32, makes for extremely handy optical scanning of the source document 14. The electronic dictionaries allow optical input of the English words to be translated, reducing input errors stemming from keyboard operation in conventional methods, enhancing operational speed and offering electronic dictionary functions that are suited to practical applications.

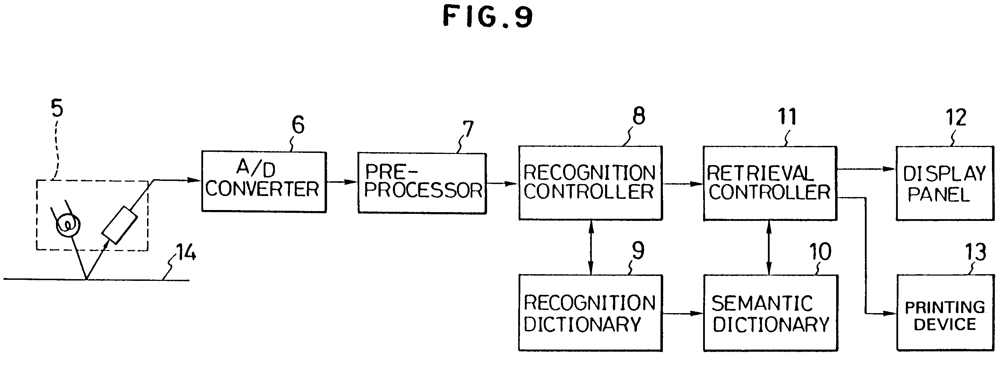

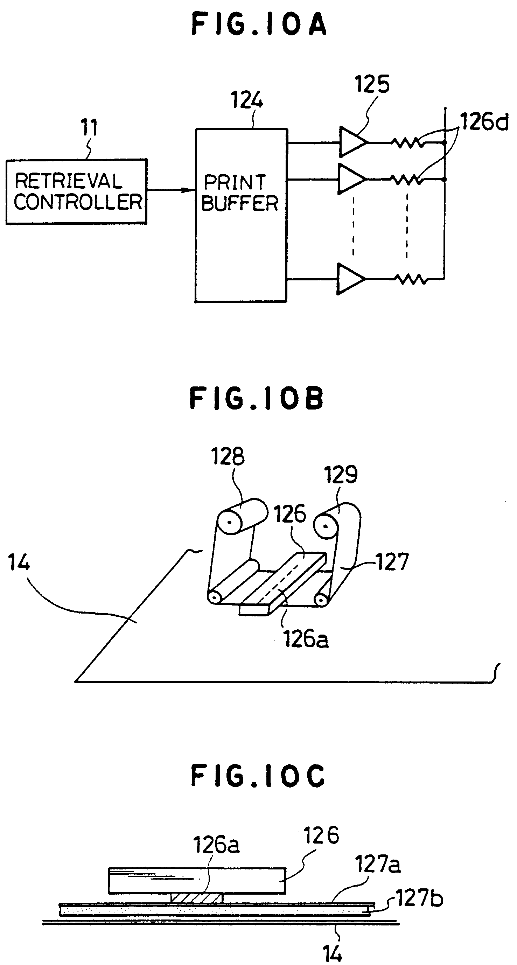

Referring now to Figure 9, another embodiment of the invention is shown. This is generally similar to the embodiment of Figure 3, but is further provided with a printing device 13 to print the Japanese language information displayed on the display panel 12. Further details of an exemplary printing device 13 are show in Figures 10A, 10B and 10C. The exemplary printing device 13 is a thermal transfer printing device using a thermal head. As shown in Figure 10A, the printing device 13 comprises a print buffer 124 which receives as print data the Japanese language information from the dictionary memory 20 (Figure 5), and drivers 125 provided to drive respective thermal elements 126d, serially connected to the said drivers 125. Figure 10B is a schematic perspective view showing a thermal head 126, which consists of an array of thermal elements 126d. A transfer ribbon 127 passes in front of the thermal head 126. This transfer ribbon 127 is drawn from a spool 128 and taken up on a reel 129. Figure 10C is a diagram, on an enlarged scale, showing the relationship between the thermal head 126 and the transfer ribbon 127. The latter is situated at a frontal part 126a of the thermal head 126 and comprises a base film 127a and an ink layer 127b. The principal constituent of the ink layer 127b is wax which melts when heat is applied. Ink 127b, heated and melted in part by thermal head 126, is transferred to the source document 14 which is placed in front of the head 126. When the semantic dictionary 10 transfers the contents of the dictionary memory 20, using the address specified by the address register 21 as starting address, one by one to the display buffer, as described above with reference to Figure 5, it also transfers the dictionary memory contents to print buffer 124.

In terms of the above "dictionary" example, this operation is carried out until endmark 22, "*", in Figure 6 is encountered i.e. until the contents of address 0051 - 0090 have been transferred. The string of alphabetic characters thus read optically are converted to Japanese word information, which is displayed on display panel 12 via the display buffer.

Printing device 13 stores the Japanese language information (print data) from dictionary memory 20 in the print buffer 124 via the retrieval controller 11. Subsequently, by appropriate timing provided by a timing generator (not shown), print data corresponding to one vertical dot line are read from buffer 124, causing the thermal dots 126d to be heated by the drivers 125. This melts the ink layer 127b on transfer ribbon 127, resulting in thermal transfer of one dot line of print data to the course document 14 which is placed in front of the ribbon. In this matter, printing of all the lines is performed according to the timing signals which are supplied sequentially.

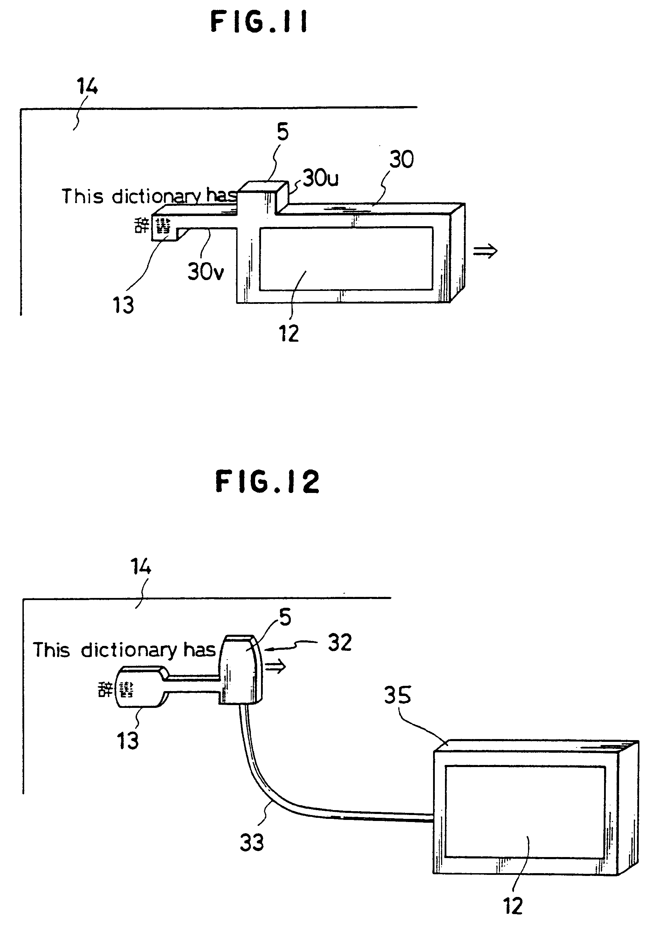

Figure 11 is a schematic perspective external view of the electronic dictionary described with reference to Figures 9 and 10. The electronic dictionary differs from that shown in Figure 7 by the provision of a protrusion 30v, located below the optical reader 5 at a fixed distance from it. The printing device 13 is integrally mounted in the protrusion 30v. During operation as described with reference to Figure 7, the printing device is positioned between the English word being read and an English word in the following line on the source document 14. When the alphabetic characters on the source document 14 are optically read, their Japanese language information is displayed on display panel 12 and at the same time is printed by printing device 13 between the lines. It is also possible to print only the meaning of the word from the Japanese language information.

The electronic dictionary shown in Figure 12 bears the same relationship to that shown in Figure 11 as the electronic dictionary shown in Figure 8 bears to that shown in Figure 7. In the electronic dictionary of Figure 12, the printing device 13 has been removed from the main unit 35 and attached to the scanner 32 in a fixed position relative to the optical reader 5. Operation is as described with reference to Figure 8, and during such operation, the printing device 13 prints between the lines on the source document 14 as described with reference to Figure 11.

As described above, the embodiments of Figures 9 to 12 allow printing of the meanings of words or compounds words translated between print lines on the source document 14, saving the operator from the trouble of writing down translated words and freeing him from cumbersome operations. Thus, the invention provides an electronic dictionary with improved operational speed, suitable for practical use.

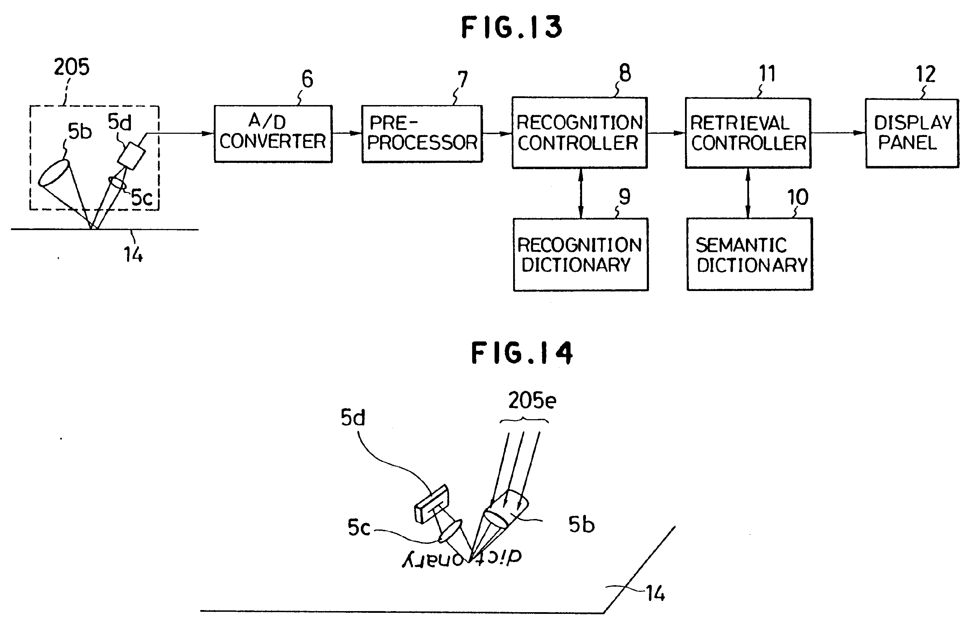

Referring now to Figure 13, another embodiment of the invention is shown. This embodiment is generally similar to the embodiment of Figure 3 but, as is shown in detail in Figure 14, the optical reader is of different type. In particular, the optical reader 205 comprises a lens 5b which condenses light from an external source 205e (light supplied from a light source external to the electronic dictionary) on to the source document 14. The optical reader 205 requires no internal light source for illuminating the source document 14. It lends itself to a simple configuration. As a result, the whole electronic dictionary can be made light and compact, and more suitable as a portable unit.

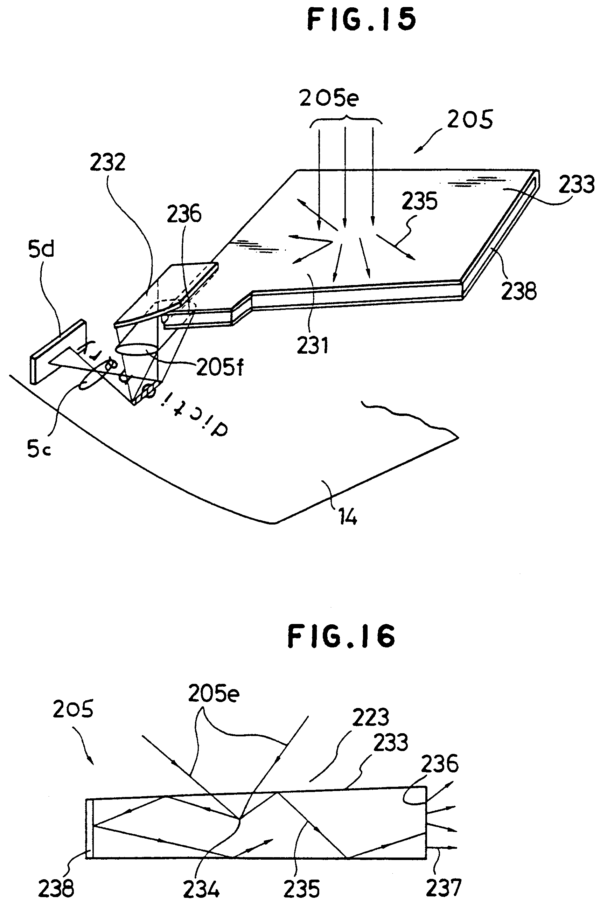

Figures 15 and 16 show a further arrangement by which the source document 14 may be illuminated by light from an external source. In this arrangement, an optical reader 205 comprises a condenser 231 which condenses light from external source 205e; a reflecting mirror 232 which reflects the light from the condenser 231; lenses 205f and 5b; and pickup sensor 5d. The condensor 231, as shown in Figure 16, is provided with a transparent plastics plate 233 in which is diffused a fluorescent dye 234. Light from the external source 205e, entering the interior of the plastics plate 233 from its surface, strikes the fluorescent dye 234; fluorescent light emitted from this location propagates forward while being totally reflected by the surface of the plastics plate 233. Most of this is guided to a tip 236 (Figures 15 and 16) of the condenser 231, and is radiated to the outside in the form of condensed light 237. Light from the external source 205e, entering from a large surface area, is thus condensed on tip 236 of condenser 231. If the other end of the plastics plate 233 is blocked by a reflecting mirror 238, the light undergoes further condensation, and is radiated in high power from the open tip 236. The high-powered condensed light undergoes bidirectional changes by reflecting mirror 232, as shown in Figure 15, enters the lens 205f, where it undergoes further condensation, and strikes the source document 14 as a beam. The reflected light then, as described in the first embodiment, is converted to electrical signals by the pickup sensor 5d through the lens 5b. The working principles of the condenser 231 peforming the above functions have been developed by BASF and an experimental version of it, named "Solar Collector", can be obtained from Morishita Sangyo Kabushiki Kaisha.

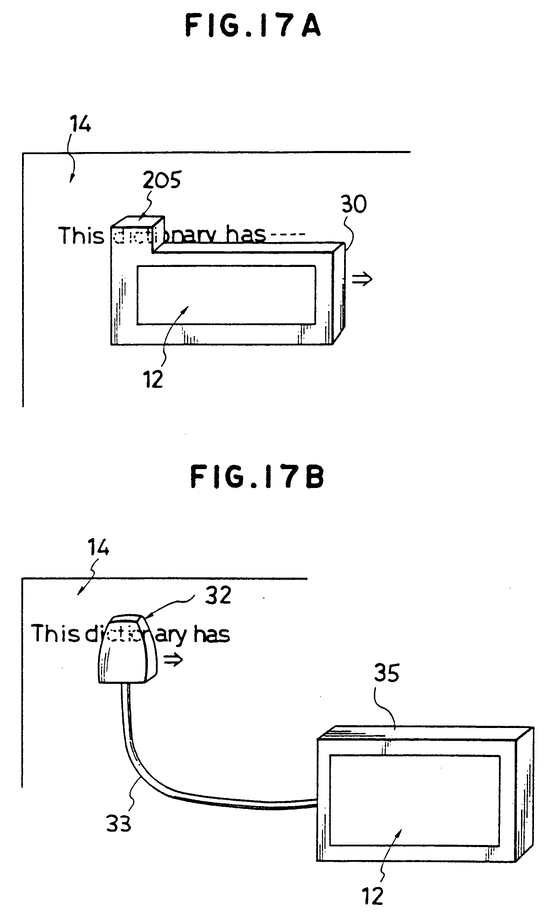

Figures 17A and 17B show hand-held electronic dictionaries similar to those described with reference to Figures 7 and 8, but which incorporate the optical reader 205 in place of the optical reader 5. The optical reader 205 may in each case be in the form described with reference to Figure 14 or in the form described with reference to Figures 15 and 16. If the latter form of optical reader 205 is incorporated, the light condenser 231 may be formed to cover the entire surface of the main unit 30 (Figure 17A) or of the scanner 32 alone (Figure 17B). The condensor 231 is transparent and does not interfere with the function of the display panel 123 in Figure 17A. Operation of the electronic dictionaries shown in Figures 17A and 17B is as described with reference to Figures 7 and 8.

The embodiments of Figures 13 to 17A, 17B feature the use of external light for read-input of the words to be translated. They thereby eliminate the need for a light source for the optical reader. This relieves the operator of the burden of switching the power for the light source on and off and makes it possible to reduce the size and weight of the electronic dictionary, thus providing a portable, practical electronic dictionary.

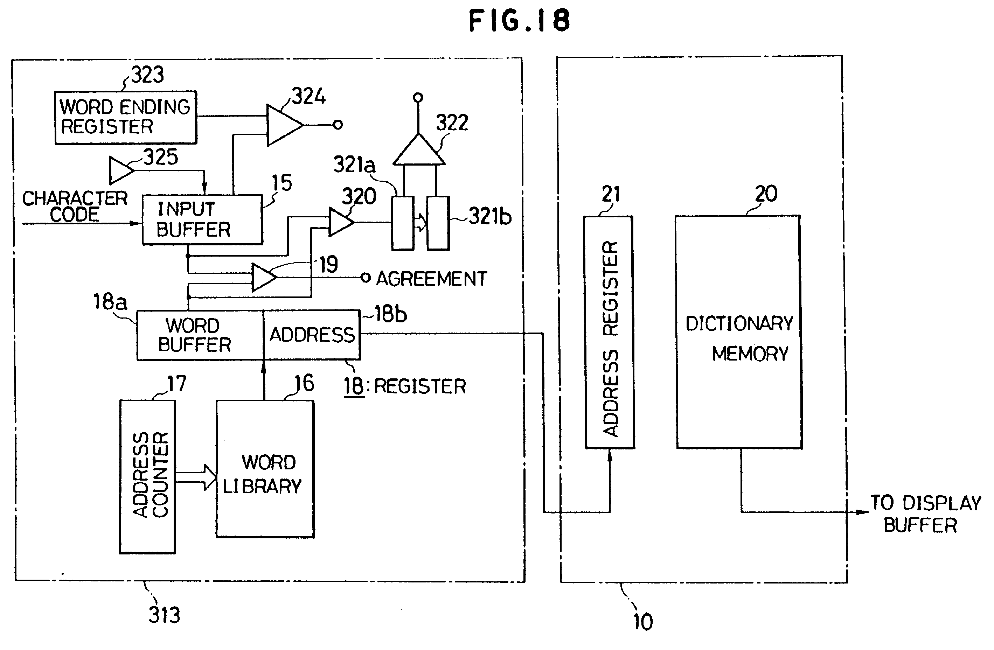

Referring now to Figure 18, there is shown the internal configuration of a retrieval controller 313, which may be substituted for the retrieval controller 11 in any of the previously described embodiments. The retrieval controller 313 is provided with a gate 320 which checks the number of characters as counted from the beginning in which input buffer 15 and the word buffer 18a in register 18 match; a memory buffer 321a which stores the current number of matching characters; a memory buffer 321b which stores the number of matching characters obtained during the last work lookup operation (the contents of the buffer 321a are shifted to the buffer 321b each time a word lookup is performed); a gate 322 which determines which of the matching characters counts stored in buffers 321a and 321b is larger; a word ending register 323 which stores a library of word ending changes, such as "ed" and "ing"; a check gate 324 which checks for agreement between the word endings in the register 323 and the input buffer 15; and a modification gate 325 which modifies the word ending in the input buffer 15.

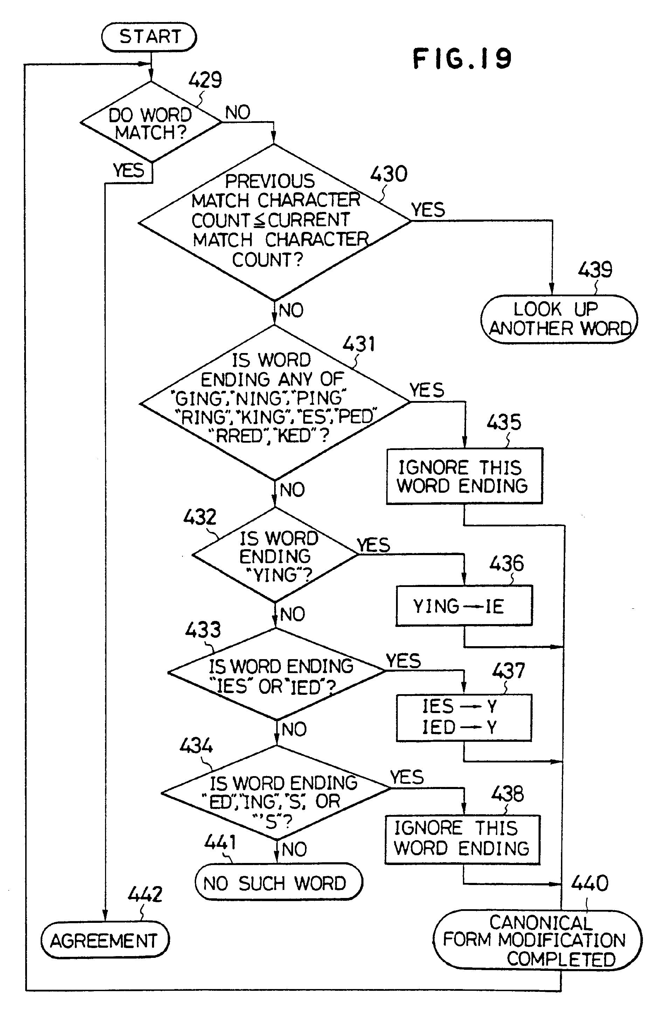

Figure 19 is a flow chart illustrating the operation of the retrieval controller 313. The string of alphabetic codes equivalent to a single word that has been identified in the recognition controller 8 is stored in the input buffer 15, shown in Figure 18. Then the English word and its address code ("a" and "0001" in Figure 6) are sent from the beginning of the word library 16 to the word buffer 18a and the address 18b in the register 18. The gate 19 then determines whether or not the character code (English word that has been read in) stored in the input buffer 15 matches the English word stored in the register 18 (Step 429 in Figure 19). If there is a match, the word lookup terminates (Step 442). If there is no match, the gate 322 determines whether the previous match character count (buffer 321b) or the current match character count (buffer 321a) is larger (Step 430). If the current match character count is greater than or equal to the previous one, the next word is looked up (Step 439).

On the other hand, if the current match character count is less than the previous one, it means that the lookup process has gone past the word sought, indicating that either the word is not in the dictionary or the given word contains a word ending change. In such a case, the output from the gate 322 is supplied to a controller which is not shown in the Figure. Then, according to an instruction from the controller, check gate 324 determines whether or not the word ending in input buffer 15 and word ending register 323 match (Step 431). If the word to be translated has a special form of variation, such as in the case of a present participle or gerund, with "ing" attached, (e.g. "ging" or "ning"), or in the case of the plural form with "s" attached, or in the case of the past tense with "ed" attached (e.g. "rred"), then check gate 324 changes the variant word into its original form by ignoring the word ending (Steps 435 and 440). The word modification is done by word ending modification gate 325 on the word contained in the input buffer 15, according to an instruction from the controller which has received output from check gate 324. If the word ending variation in a given word fails the test at Step 431, and if it is determined that a variant of the word ending "ing" is "ying" (Step 432), the word ending "ying" is modified to "ie" by word ending modification gate 325 (Step 436 and 440). If a given word ending is either "ies" or "ied", it is changed to "y" in both cases (Steps 437 and 440).

Finally, if a word ending is not a special variant, i.e. simple addition of "ed" for the past tense of a verb; addition of "ing" to transform a verb into a present particle or verb-noun; or addition of "s" to in the plural form of a noun; or a word having the ending "'s" indicating the possessive case; such word endings are all ignored by gate 325 (Steps 438 and 440). It is by these procedures that word ending variations are processed. If control is passed to Step 339 following the above processing steps, i.e. if the next word is to be looked up, "1" is added to address counter 317, which causes the next word and address (e.g. "abandon" and "0002" in the figure) in the word library 16 to be stored in the register 18. Then, similarly the gate 19 determines whether or not the word in the register 18 matches the English word that has been read in. Thus, the words in the word library 16 continue to be read until a match is found between the English word that has been read in and an English word read from the word library 16.

If Step 440 has been reached, word lookup is performed again, this time on the variant word whose word ending has been modified (canonical word) (Step 429).

If Step 441 has been reached, it means that the word being sought is not in the word library 16. In this case, for example, in accordance with the output from check gate 324, the controller displays a message to that effect on the display panel 12, and terminates the operation.

As described above, the above embodiment identifies variants of a given word to be translated and to obtain the translated language information corresponding to the canonical form of the word to be translated. This eliminates the need for correcting variant words into their original forms before entry into the dictionary, as is the case with conventional methods. Moreover, this feature combined with use of the optical reader offer practical electronic dictionaries with improved operability.

In the embodiment of Figure 19, some word endings are shown to be taken care of, but it may be so arranged that other word endings are also taken care of. Such other examples include those of the comparatives of adjectives and adverbs (e.g. "er", "ier", "ger") and those of the superlatives of adjectives and adverbs (e.g. "est", "iest", "gest").

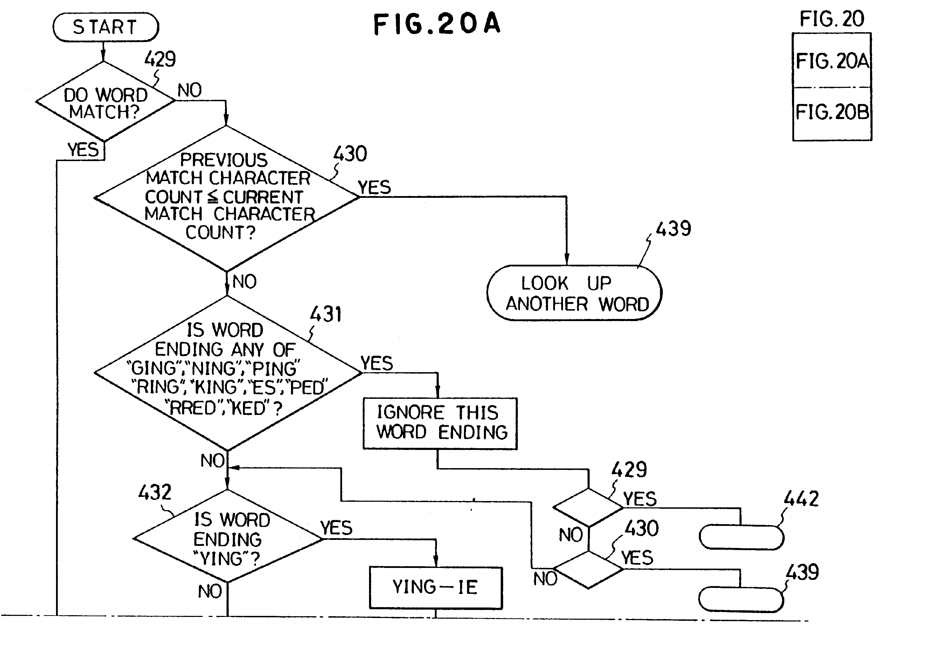

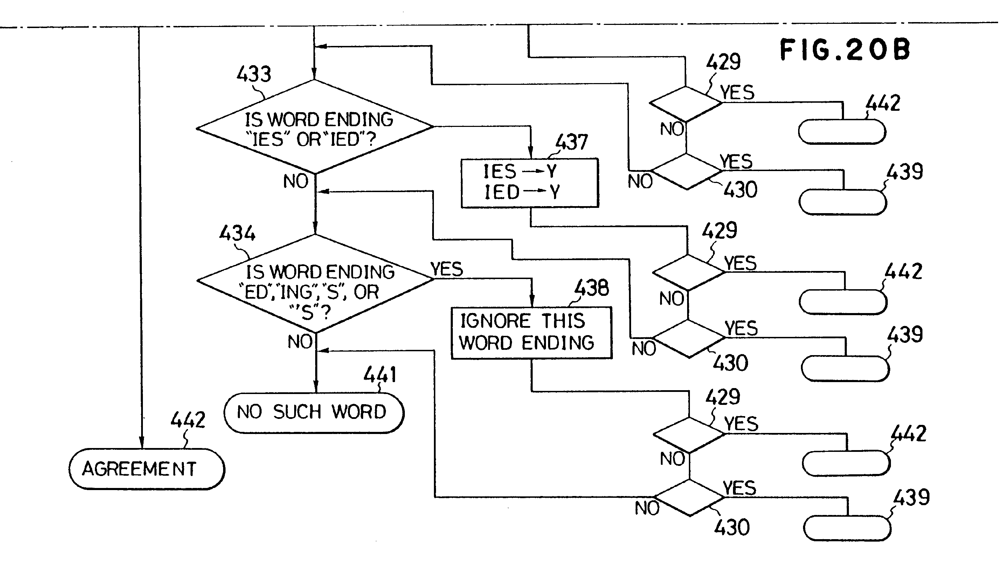

As an alternative to the procedure shown in Figure 19, it may be so arranged that after any of the steps 435, 436 and 437 of word ending modification, the steps 429 and 430 are performed on the word that has been modified and if the answer at the step 430 is negative, the steps 432, 433 and 434 are performed. This procedure is illustrated in Figure 20.

In the various embodiments described above, the retrieval starts with the first word of the dictionary. But it may be so arranged that the retrieval starts with the first word that begins with the first character of the word that has been input (i.e. optically read).

## Claims

1. An electronic translating device for the electronic translation of words or compound words in a source language on a source document (14) to the corresponding words or compound words in a target language, the electronic translating device comprising a scanner housing unit (30,32), an optical reader (5,205) fixedly mounted in the scanner housing unit (30,32) so as to be fixed relative thereto, which optically reads the source language to be translated from the source document (14), a translation unit (6-10 and 11 or 313) which produces an output of the target language on the basis of the data output from the optical reader (5,205), a display unit (12) for displaying the target language, and CHARACTERISED BY a priting device (13) fixedly mounted in the scanner housing unit (30,32) so as to be fixed relative to the scanner housing unit (30,32) and the optical reader (5,205) for automatically printing the target language on to the source document (14) at a fixed distance from the position of the optical reader (5,205) in the vicinity of the corresponding word or compound words of the source language to be translated during the reading of the source language by the optical reader (5,205).

2. An electronic translating device according to claim 1 wherein the words or compound words of the target language are printed on to the source document (14) between successive lines of the source language.

3. An electronic translating device according to claim 1 or claim 2 wherein the optical reader (5,205), the translation unit (6-10 and 11 or 313), the display unit (12) and the printing device (13) are provided in a unitary housing (30).

4. An electronic translating device according to claim 1 or claim 2 wherein the translation unit (6-10 and 11 or 313) and the display unit (12) are provided in a unitary housing (35) to which the scanner housing unit (32) is connected by a connector cord (33).

5. An electronic translating device according to any preceding claim wherein the optical reader (205) optically reads the source language by illuminating the source document (14) with light from an external source (205e) and by converting the reflected light into electrical signals.

6. An electronic translating device according to claim 5 wherein the optical reader (205) has a condensor (5b or 231,232,205f) for condensing the light from the external source (205e).

7. An electronic translating device according to any preceding claim characterised in that the translation unit (6-10,313) identifies variants of the source language and produces an output of target language corresponding to the basic form of the word which has appeared in the variant form.

## Patentansprüche

1. Elektronische Übersetzungsvorrichtung zum elektronischen Übersetzen von Worten oder zusammengesetzten Worten in einem Ausgangsdokument (14) von einer Ausgangssprache in die entsprechenden Worte oder zusammengesetzten Worte einer Zielsprache, wobei die elektronische Übersetzungsvorrichtung folgendes aufweist:
- eine Scanner-Gehäuseeinheit (30, 32),
- eine optische Lesevorrichtung (5, 205), die in der Scanner-Gehäuseeinheit fest montiert ist und in Bezug auf dieses Gehäuse starr fixiert ist, und die die vom Ausgangsdokument (14) zu übersetzende Ausgangssprache optisch liest,
- eine Übersetzungseinheit (6 bis 10 und 11 oder 313), die eine Ausgabe der Zielsprache auf der Basis der Datenausgabe der optischen Lesevorrichtung (5, 205) erzeugt, und
- eine Displayeinheit (12) zum Anzeigen der Zielsprache,
wobei die elektronische Übersetzungsvorrichtung gekennzeichnet ist durch
- eine Druckvorrichtung (13), die in der Scanner-Gehäuseeinheit (30, 32) fest montiert ist und in Bezug auf die Scanner-Gehäuseeinheit (30, 32) sowie die optische Lesevorrichtung (5, 205) starr fixiert ist, um die Zielsprache in einem festgelegten Abstand von der Position der optischen Lesevorrichtung (5,205) aus automatisch auf das Ausgangsdokument zu drucken, und zwar in die Nähe des entsprechenden Wortes oder der zusammengesetzten Worte der Ausgangssprache, die während des Lesens der Ausgangssprache durch die optische Lesevorrichtung (5, 205) übersetzt werden sollen.

2. Elektronische Übersetzungsvorrichtung nach Anspruch 1, bei der die Worte oder zusammengesetzten Worte der Zielsprache zwischen die aufeinanderfolgenden Zeilen der Ausgangssprache auf das Ausgangsdokument (14) gedruckt werden.

3. Elektronische Übersetzungsvorrichtung nach Anspruch 1 oder 2, bei der die optische Lesevorrichtung (5, 205), die Übersetzungseinheit (6 bis 10 und 11 oder 313), die Displayeinheit (12) und die Druckvorrichtung (13) in einem gemeinsamen Gehäuse (30) untergebracht sind.

4. Elektronische Übersetzungsvorrichtung nach Anspruch 1 oder 2, bei der die Übersetzungseinheit (6 bis 10 und 11 oder 313) und die Displayeinheit (12) in einem gemeinsamen Gehäuse (35) untergebracht sind, mit dem die Scanner-Gehäuseeinheit (32) durch ein Verbindungskabel (33) verbunden ist.

5. Elektronische Übersetzungsvorrichtung nach einem der vorhergehenden Ansprüche, bei der die optische Lesevorrichtung (205) die Ausgangssprache dadurch optisch liest, daß sie das Ausgangsdokument (14) mit Licht von einer externen Lichtquelle (205e) beleuchtet und das reflektierte Licht in elektrische Signale umwandelt.

6. Elektronische Übersetzungsvorrichtung nach Anspruch 5, bei der die optische Lesevorrichtung (205) einen Kondensor (5b oder 231, 232, 205f) aufweist, um das Licht von der externen Lichtquelle (205e) zu konzentrieren.

7. Elektronische Übersetzungsvorrichtung nach einem der vorhergehenden Ansprüche, dadurch gekennzeichnet, daß die Übersetzungseinheit (6 bis 10, 313) Varianten der Ausgangssprache identifiziert und eine Ausgabe der Zielsprache entsprechend der Grundform des Wortes erzeugt, das in variierter Form aufgetreten ist.

## Revendications

1. Dispositif de traduction électronique pour la traduction électronique de mots, ou de mots composés, dans une langue source sur un document source (14), en mots ou mots composés correspondants dans une langue destination, le dispositif de traduction électronique comprenant une unité boîtier de capteur à balayage (30, 32), un lecteur optique (5, 205) monté à demeure dans l'unité boîtier de capteur à balayage (30, 32) de façon à être fixe par rapport à celui-ci, qui lit de manière optique la langue source à traduire sur le document source (14), une unité de traduction (6 à 10 et 11 ou 313) qui produit une sortie de la langue destination sur la base de la donnée délivrée par le lecteur optique (5, 205), une unité d'affichage (12) pour l'affichage dans langue destination, et caractérisé par un dispositif d'impression (13) monté à demeure dans l'unité boîtier de capteur à balayage (30, 32) de façon à être fixe par rapport à l'unité boîtier de capteur à balayage (30, 32) et au lecteur optique (5, 205) de façon à imprimer automatiquement la langue destination sur le document source (14), à une distance fixe par rapport à la position du lecteur optique (5, 205) à proximité du mot, ou du mot composé, correspondant de la langue source à traduire, pendant la lecture dans la langue source par le lecteur optique (5, 205).

2. Dispositif de traduction électronique selon la revendication 1 dans lequel les mots, ou mots composés, de la langue destination sont imprimés sur un document source (14) entre les lignes successives de la langue source.

3. Dispositif de traduction électronique selon la revendication 1 ou la revendication 2, dans lequel le lecteur optique (5, 205), l'unité de traduction (6 à 10 et 11 ou 313), l'unité d'affichage (12) et le dispositif d'impression (13) sont prévus dans un même boîtier (30).

4. Dispositif de traduction électronique selon la revendication 1 ou la revendication 2, dans lequel l'unité de traduction (6 à 10 et 11 ou 313) et l'unité d'affichage (12) sont prévues dans un même boîtier (35) auquel l'unité boîtier de capteur à balayage (32) est reliée par un câble de liaison (33).

5. Dispositif de traduction électronique selon l'une quelconque des revendications précédentes, dans lequel le lecteur optique (205) lit de manière optique la langue source en éclairant le document source (14) avec de la lumière issue d'une source externe (205e) et en convertissant la lumière réfléchie en signaux électriques.

6. Dispositif de traduction électronique selon la revendication 5, dans lequel le lecteur optique (205) est pourvu d'un condenseur (5b ou 231, 232, 205f) pour concentrer la lumière issue de la source externe (205e).

7. Dispositif de traduction électronique selon l'une quelconque des revendications précédentes, caractérisé en ce que l'unité de traduction (6 à 10, 313) identifie des variantes de la langue source et produit une sortie de la langue destination correspondant à la forme de base du mot qui est apparu dans la forme variante.
